# FASCICULE DE BREVET EUROPEEN

(11) **EP 3 516 543 B1**
(45) Date de publication et mention de la délivrance du brevet: **17.05.2023**
(21) Numéro de dépôt: 17768190.5
(22) Date de dépôt: 06.09.2017
(51) Int. Cl.: G01B 11/02, G01B 11/24, G06T 3/40, G06T 7/50, G06F 3/147, G06F 16/583, G06T 7/60

(54) **PROCEDE DE DETERMINATION D'UNE DIMENSION D'ENSEMBLE D'UN VEHICULE EQUIPE D'UN CHARGEMENT EXTERIEUR**
VERFAHREN ZUR BESTIMMUNG EINER GESAMTABMESSUNG EINES FAHRZEUGES MIT EINER EXTERNEN LAST
METHOD FOR DETERMINING AN OVERALL DIMENSION OF A VEHICLE EQUIPPED WITH AN EXTERNAL LOAD

(30) Priorité: 20.09.2016 FR 1658792
(43) Date de publication de la demande: 31.07.2019
(73) Titulaire: Renault s.a.s, 92100 Boulogne Billancourt (FR)
(72) Inventeur: LAURENT, François, 78280 Guyancourt (FR); LALLEMENT, Stéphane, 28130 Pierres (FR)
(74) Mandataire: Renault Group
(86) Numéro de dépôt international: PCT/FR2017/052359
(87) Numéro de publication internationale: WO 2018/055254

(56) Documents cités:
- EP-A1- 1 341 078
- JP-A- 2005 186 758
- US-A1- 2012 327 172
- US-A1- 2016 147 795

## Description

### DOMAINE TECHNIQUE AUQUEL SE RAPPORTE L'INVENTION

La présente invention concerne de manière générale les aides à la conduite de véhicules automobiles.

Elle concerne plus particulièrement un procédé de détermination d'une dimension d'ensemble d'un véhicule automobile équipé à l'extérieur d'un chargement.

Elle concerne aussi une méthode d'aide à la conduite d'un véhicule automobile, utilisant les résultats de ce procédé.

Elle concerne également un terminal informatique mobile, par exemple un « smartphone », permettant de mettre en oeuvre ce procédé.

### ARRIÈRE-PLAN TECHNOLOGIQUE

Il est connu de placer des barres de toit sur le dessus d'un véhicule automobile. De telles barres de toit permettent en effet de charger le véhicule sur le toit si le chargement est particulièrement encombrant, ou si l'intérieur du véhicule est déjà surchargé.

Ainsi équipé, le véhicule présente des dimensions différentes de celles qu'il présente à vide.

Le risque est alors que, n'ayant pas conscience des dimensions effectives de son véhicule, le conducteur les sous-évalue et que les équipements placés à l'extérieur du véhicule entrent en collision avec des infrastructures diverses, telles que par exemple le plafond d'un tunnel, les plafonds et murs d'un parking souterrain...

EP 1 341 078 A1 décrit un procédé de transmission de données d'images entre un serveur et un terminal.

JP 2005 186758 A décrit un dispositif d'aide au stationnement.

### OBJET DE L'INVENTION

Afin de remédier à cet inconvénient, la présente invention propose un procédé permettant de faciliter la détermination de la dimension d'ensemble du véhicule automobile chargé, en vue de faire prendre conscience au conducteur des dimensions réelles de son véhicule et d'éviter ainsi que les équipements placés à l'extérieur du véhicule ne viennent percuter les infrastructures bordant le trajet que le véhicule emprunte.

Plus particulièrement, on propose selon l'invention un procédé de détermination d'une dimension d'ensemble d'un véhicule automobile équipé à l'extérieur d'un chargement, dans lequel il est prévu des étapes de :
a) acquisition d'une image sur laquelle apparaît une partie au moins dudit véhicule automobile et dudit chargement,
b) acquisition d'un gabarit de forme associé audit véhicule automobile,
c) mise à l'échelle dudit gabarit de forme par rapport à l'image de ladite partie du véhicule automobile, et
d) déduction de ladite dimension d'ensemble basée sur l'étape de mise à l'échelle, l'image de ladite partie du véhicule automobile et le gabarit de forme étant affichés en position superposée sur un écran, puis le gabarit de forme étant mis à l'échelle de telle manière qu'il se superpose au contour du véhicule automobile.

Ainsi, à titre d'exemple, le conducteur pourra, avant d'embarquer dans son véhicule, prendre une photo de son véhicule chargé afin de connaître la hauteur d'ensemble et/ou la largeur d'ensemble de son véhicule. Compte tenu de ces informations, il pourra alors adapter sa conduite ou son trajet de manière à éviter toute sorte d'accident.

D'autres caractéristiques avantageuses et non limitatives du procédé de détermination conforme à l'invention sont les suivantes :
- à l'étape d), il est prévu d'afficher sur l'écran deux motifs passant respectivement par deux points du véhicule automobile et/ou dudit chargement, ces deux points étant les plus éloignés l'un de l'autre selon une direction selon laquelle la dimension d'ensemble est déterminée, puis de déduire ladite dimension d'ensemble de l'écart séparant les deux motifs sur l'écran ;
- à l'étape c), la mise à l'échelle du gabarit de forme est effectuée manuellement, puis, à l'étape d), les positions des deux motifs par rapport au véhicule automobile et au chargement sont ajustées manuellement ;
- le gabarit de forme est mémorisé dans la mémoire d'un terminal informatique mobile ;
- ladite mémoire mémorisant plusieurs gabarits de forme associés audit véhicule automobile, à l'étape b), le gabarit de forme acquis est sélectionné en fonction de l'orientation du terminal informatique mobile ;
- il est prévu une étape e) de comparaison de ladite dimension d'ensemble avec un seuil et d'émission d'un signal d'alerte si ladite dimension d'ensemble dépasse ledit seuil ; et
- il est prévu une étape f) de détermination d'une dimension interne séparant un point du véhicule automobile et un point dudit chargement, de comparaison de ladite dimension interne avec un seuil et d'émission d'un signal d'alerte si ladite dimension interne dépasse ledit seuil.

L'invention propose également une méthode d'aide à la conduite d'un véhicule automobile, comportant une opération préalable de mise en oeuvre d'un procédé de détermination tel que précité, puis, lorsque le véhicule automobile emprunte un trajet, des étapes :
- de recherche, le long du trajet emprunté, d'une limite de dimension d'ensemble au-delà de laquelle le passage d'un véhicule automobile est interdit,
- de comparaison de la dimension d'ensemble avec ladite limite, puis, si la dimension d'ensemble dépasse ladite limite,
- d'émission d'un signal d'alerte à l'attention du conducteur du véhicule automobile.

L'invention propose aussi un terminal informatique mobile tel que ni dans la revendication 9 et comportant notamment :
- un capteur d'images adapté à acquérir une image sur laquelle apparaît une partie au moins d'un véhicule automobile équipé à l'extérieur d'au moins un chargement,
- une mémoire adaptée à mémoriser un gabarit de forme associé audit véhicule automobile,
- un écran adapté à afficher une image de ladite partie du véhicule automobile et dudit chargement, superposé au gabarit de forme, et
- un calculateur.

### DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés, on a représenté un téléphone mobile permettant d'illustrer l'invention. Plus précisément :
- les figures 1 à 3 illustrent trois étapes permettant de mettre en oeuvre le procédé de détermination conforme à l'invention,
- les figures 4 et 5 illustrent deux étapes permettant de mettre en oeuvre une variante de réalisation du procédé de détermination conforme à l'invention, et
- la figure 6 illustre une étape d'une autre variante de réalisation du procédé de détermination conforme à l'invention.

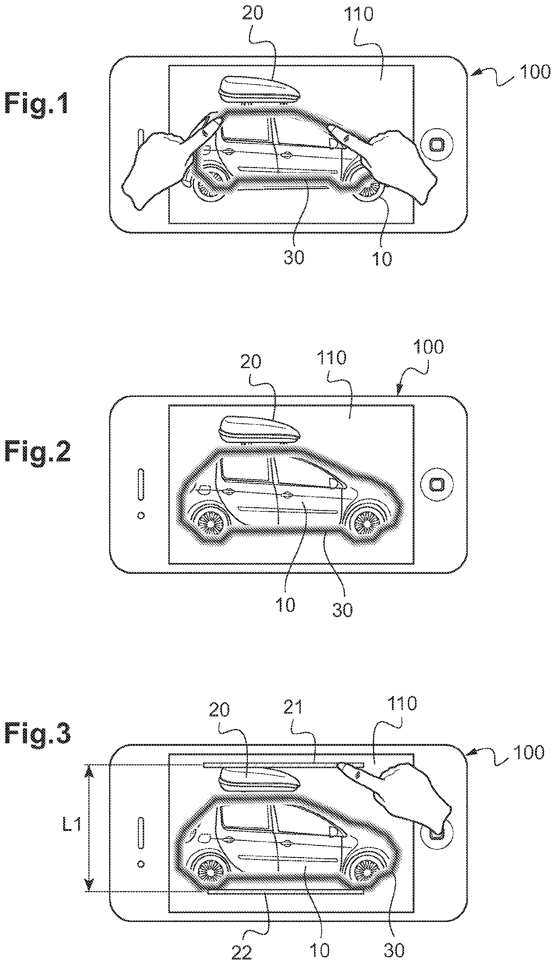

Sur les figures 1 à 6, on a représenté un terminal informatique mobile.

Ce terminal informatique mobile est ici un téléphone portable 100 intelligent (ou « smartphone »).

En variante, il pourrait s'agir d'un autre type de terminal mobile, par exemple d'une télécommande dédiée à la mise en oeuvre de l'invention, ou d'une montre connectée, ou encore d'une tablette informatique.

Ce téléphone portable 100 comprend classiquement un châssis qui loge un calculateur, une mémoire, une interface utilisateur et un capteur d'images.

Ici, l'interface utilisateur est un écran tactile 110 qui émerge sur la face avant du châssis.

Le capteur d'images est une mini-caméra qui émerge sur le dos du terminal mobile (à l'opposé de l'écran tactile 110).

La mémoire est ici une mémoire non volatile réinscriptible.

Elle permet de mémoriser une application utilisateur, destinée à faciliter la mise en oeuvre de l'invention. Cette application sera appelée dans la suite de cet exposé « application de détermination d'encombrement ».

La mémoire est également adaptée à mémoriser diverses données, dont au moins :
- une largeur à vide L2₀,
- une hauteur à vide L1₀, et
- un gabarit de forme 30, 31.

En pratique, l'application de détermination d'encombrement mémorisée dans la mémoire étant associée à un modèle particulier de véhicule automobile, on considérera que la mémoire stocke une seule largeur à vide L2₀, une seule hauteur à vide L1₀, et deux gabarit de forme 30, 31.

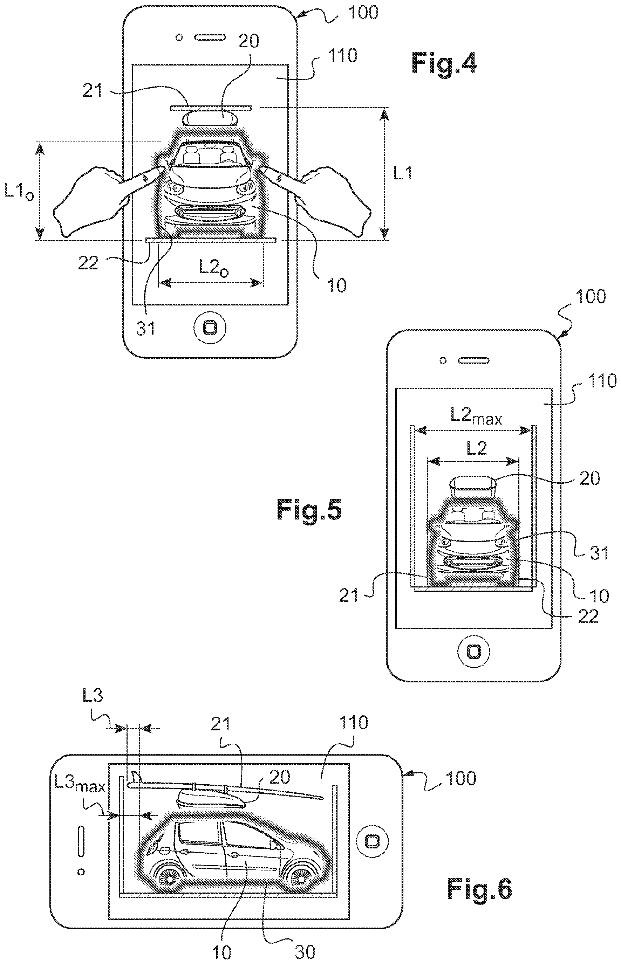

Comme le montre bien la figure 4, la largeur à vide L2₀ correspond à la plus grande largeur du véhicule, qui est généralement égale à la distance séparant les extrémités opposées des deux rétroviseurs extérieurs du véhicule. La hauteur à vide L1₀ correspond à la plus grande hauteur du véhicule, qui est généralement égale à la distance séparant le sol du toit du véhicule.

Comme le montrent les figures 2 et 4, les gabarits de forme 30, 31 représentent respectivement les contours des silhouettes du véhicule automobile, vu de face et vu de côté.

Sur l'écran tactile 110, on a représenté une photo d'un véhicule automobile 10 chargé.

Comme cela apparaît sur la figure 1, le véhicule automobile 10 est une voiture comportant quatre roues. En variante, il pourrait s'agir d'un véhicule automobile comprenant davantage de roues, notamment d'un camion, d'un car, d'un bus, ...

Ce véhicule automobile 10 est qualifié de « chargé » en ce sens qu'il est équipé à l'extérieur d'un chargement 20 qui augmente l'encombrement total du véhicule. Dans la suite de cet exposé, l'expression « véhicule automobile 10 chargé » désignera donc l'ensemble comprenant le véhicule automobile 10 et son chargement 20.

Tel que représenté sur la figure 1, ce chargement 20 est constitué par un coffre fixé sur le toit du véhicule. En variante, il pourrait s'agir d'un autre type de chargement. En variante également, le chargement pourrait être installé dans une position différente (notamment sur le hayon arrière du véhicule).

L'objet de la présente invention sera alors de faciliter la détermination d'une dimension d'ensemble L1, L2 du véhicule automobile 10 ainsi chargé.

Cette dimension d'ensemble pourra être la hauteur totale L1 du véhicule automobile 10 chargé et/ou la largeur totale L2 du véhicule automobile 10 chargé et/ou la longueur totale du véhicule automobile 10 chargé.

La hauteur totale L1 sera mesurée selon un axe vertical lorsque le véhicule automobile est situé sur un sol horizontal. La largeur totale L2 sera mesurée selon un axe horizontal et orthogonal à l'axe longitudinal du véhicule. Enfin, la longueur sera mesurée selon cet axe longitudinal (horizontalement).

Dans la suite de cet exposé, les adjectifs horizontal et vertical pourront également être employés en référence au téléphone mobile 100. Dans ce cas, on considérera que ce dernier est tenu de telle manière que son écran tactile 110 s'étende dans un plan vertical.

La manière selon laquelle la dimension d'ensemble L1, L2 sera déterminée peut maintenant être décrite plus en détail.

Lorsque le conducteur du véhicule automobile 10 sélectionne sur son téléphone mobile 100 l'application de détermination d'encombrement, le calculateur commande l'affichage sur l'écran tactile 110 d'un message qui invite le conducteur à prendre une photo de son véhicule automobile 10 chargé.

Le conducteur est plus précisément invité à prendre :
- soit une photo de côté de son véhicule, en tenant son téléphone mobile 110 de manière que l'axe longitudinal de ce dernier s'étende sensiblement à l'horizontal (figure 1),
- soit une photo de face de son véhicule, en tenant son téléphone mobile 110 de manière que l'axe longitudinal de ce dernier s'étende sensiblement à la verticale (figure 4).

A l'issue de cette étape d'acquisition d'image, l'application peut éventuellement être prévue pour vérifier que la photo acquise correspond bien à la vue souhaitée, grâce à un logiciel de traitement d'images.

Elle peut également éventuellement être prévue pour contrôler que l'ensemble du véhicule automobile 10 et de son chargement 20 apparaisse bien sur la photo acquise.

Quoi qu'il en soit, une fois la photo acquise, le calculateur lit dans la mémoire du téléphone mobile 100 le gabarit de forme 30, 31 qui correspond à l'angle de prise de vue du véhicule.

Puis il commande l'affichage sur l'écran tactile 110 de ce gabarit de forme 30, 31, en superposition de la photo acquise.

Les figures 1 et 4 illustrent respectivement les deux cas envisagés, celui où la photo acquise est prise du côté du véhicule, et celui où la photo acquise est prise de face.

Au cours de cette étape, on pourra prévoir l'affichage d'un bouton virtuel, permettant au conducteur de retourner le gabarit de forme 30, 31 (par une symétrie d'axe vertical), pour l'adapter au cas où la photo a été prise depuis la gauche ou depuis la droite du véhicule.

Au cours d'une étape suivante, le calculateur commande l'affichage sur l'écran tactile 110 d'un message invitant le conducteur à mettre le gabarit de forme 30, 31 à l'échelle de la photo.

Ici, par mettre à l'échelle, on entend superposer le gabarit de forme 30, 31 au contour du véhicule automobile 10 apparaissant sur la photo.

Pour cela, comme le montrent les figures 1 et 4, le conducteur peut interagir manuellement avec l'écran tactile 110 pour déplacer le gabarit de forme 30 et pour l'agrandir ou le rétrécir. Il peut pour cela utiliser deux doigts qu'il déplace soit en parallèle pour mouvoir le gabarit de forme 30, 31, soit dans des directions opposées pour l'agrandir ou le rétrécir.

Une fois qu'il estime que le gabarit de forme 30, 31 est correctement mis à l'échelle (figure 2), le conducteur valide cette étape. Il peut pour cela par exemple utiliser un bouton virtuel affiché sur l'écran.

Alors, le calculateur commande l'affichage sur l'écran tactile 110 de deux motifs 21, 22 (figure 3). Ces deux motifs sont ici affichés en vue de permettre au conducteur d'indiquer au calculateur deux points entre lesquels il souhaite que la dimension d'ensemble L1, L2 soit mesurée.

En pratique, ces deux motifs 21, 22 sont ici formés par deux traits horizontaux (cas des figures 3 et 4) ou verticaux (cas de la figure 5), mais ils pourraient se présenter sous des formes différentes.

Dans le cas des figures 3 et 4, chaque trait est prévu pour être déplacé verticalement, de manière que l'un d'eux passe par le point le plus bas du véhicule, c'est-à-dire à la hauteur du sol, et que l'autre passe par le point le plus haut du chargement 20.

Dans le cas de la figure 5, chaque trait est prévu pour être déplacé horizontalement, de manière qu'ils passent respectivement par les deux points les plus éloignés horizontalement du véhicule automobile 10 chargé. Ici, parce que le chargement 20 ne dépasse pas des côtés du véhicule, ces deux traits 21, 22 sont positionnés de manière qu'ils passent par les extrémités opposées des deux rétroviseurs extérieurs.

Une fois cette opération effectuée, l'utilisateur valide cette étape. Il peut pour cela par exemple utiliser un bouton virtuel affiché sur l'écran.

Alors, le calculateur est en mesure de déterminer, par une simple « règle de trois », la hauteur totale L1 et/ou la largeur totale L2 du véhicule automobile 10 chargé, compte tenu de :
- la hauteur et/ou la largeur à vide L1₀, L2₀ du véhicule automobile 10 (dont on rappelle qu'elle est mémorisée dans la mémoire), exprimée en mètres,
- la hauteur du gabarit de forme 30, 31 sur l'écran, exprimé en pixels, et
- l'écart séparant les deux motifs 21, 22, exprimé en pixels.

Le résultat de cet algorithme peut alors être utilisé de différentes manières (combinables entre elles).

Dans un premier mode de réalisation, ce résultat peut être tout simplement affiché sur l'écran tactile 110 du téléphone mobile 100, de manière que le conducteur du véhicule puisse en prendre connaissance.

Dans un second mode de réalisation, le résultat peut être comparé avec un seuil, de manière à vérifier que la dimension d'ensemble L1, L2 du véhicule automobile 10 chargé ne dépasse pas une quelconque norme en vigueur.

Typiquement, comme le montre la figure 5, le calculateur peut comparer la largeur totale L2 avec un seuil L2max (par exemple égal à 2,5 mètres). Alors, si cette largeur totale L2 dépasse le seuil L2max, le calculateur peut émettre un signal d'alerte à l'endroit du conducteur pour l'informer que son véhicule automobile 10 ainsi chargé ne respecte pas les normes en vigueur.

Ce signal d'alerte pourra par exemple se présenter sous la forme d'un message affiché sur l'écran tactile 110 du téléphone mobile 100, ou sous toute autre forme.

Dans un troisième mode de réalisation, on pourra prévoir que le calculateur du téléphone mobile 100 ou un calculateur embarqué dans le véhicule (auquel la dimension d'ensemble L1, L2 aura été préalablement communiquée) mette en oeuvre, lorsque le véhicule automobile 10 emprunte un quelconque trajet, des étapes :
- de recherche d'une limite réglementaire Limite de dimension d'ensemble au-delà de laquelle le passage d'un véhicule automobile est interdit,
- de comparaison de la dimension d'ensemble L1, L2 avec ladite limite réglementaire Lₗᵢₘᵢₜₑ, puis, si la dimension d'ensemble L1, L2 dépasse ladite limite réglementaire Lₗᵢₘᵢₜₑ,
- d'émission d'un signal d'alerte à l'attention du conducteur du véhicule automobile 10.

Pour cela, plusieurs variantes de réalisation peuvent être envisagées.

Dans une première variante, le calculateur peut exploiter un système de navigation comprenant une cartographie détaillée du réseau routier, laquelle cartographie mémorise les limites réglementaire de dimension autorisées sur chaque partie de ce réseau routier.

Alors, le calculateur pourra être programmé pour ne proposer que des trajets sur lesquels les limites réglementaires sont supérieures à la dimension d'ensemble L1, L2 du véhicule automobile 10 chargé.

En variante, le calculateur peut être programmé pour émettre un signal d'alerte à destination du conducteur lorsque le véhicule s'approche d'une zone dans laquelle la limite réglementaire est inférieure à la dimension d'ensemble L1, L2 du véhicule automobile 10 chargé.

Dans une autre variante, on pourra prévoir qu'au démarrage du véhicule, le calculateur embarqué propose au conducteur une liste de panneaux de limitation de dimension (par exemple des panneaux de limite de hauteur sur lesquels apparaissent les dimensions suivantes : 1,9m, 2m, 2,1m, ..., 3,5m). Alors, le conducteur pourra sélectionner dans cette liste les panneaux correspondant aux limites réglementaires qui sont inférieures à la dimension d'ensemble L1, L2 du véhicule automobile 10 chargé.

Le calculateur étant alors en mesure de communiquer avec une caméra frontale équipant le véhicule automobile et de traiter les images acquises par cette caméra frontale pour repérer les panneaux de limitation de hauteur, il pourra alors émettre un signal d'alerte à destination du conducteur lorsque le véhicule passe à côté d'un panneau identique à l'un des panneaux sélectionnés.

Enfin, en référence à la figure 6, on pourra envisager une dernière utilisation possible de l'application de détermination d'encombrement.

Dans un grand nombre de pays, les législations en vigueur imposent de signaler par un élément de couleur rouge tout chargement dépassant à l'arrière du véhicule automobile de plus d'un mètre.

Alors, lorsqu'une photo de côté a été prise du véhicule et que le chargement 21 (ici une planche de surf) dépasse à l'arrière du véhicule, le calculateur peut déterminer, en pixels, une dimension interne L3 séparant le point d'extrémité arrière du véhicule automobile 10 du point d'extrémité arrière du chargement 21. Il peut ensuite comparer cette dimension interne L3 avec un seuil L3max (ici égal à 1 mètre) et émettre un signal d'alerte à l'endroit du conducteur si cette dimension interne L3 dépasse ce seuil L3max.

La présente invention n'est nullement limitée aux modes de réalisation décrits et représentés. L'invention est définie dans les revendications.

En particulier, on pourrait équiper l'application de détermination d'encombrement d'un logiciel de traitement d'image permettant de repérer automatiquement le contour du véhicule automobile 10 et le contour du chargement 20 sur la photo acquise. De cette manière, le calculateur pourrait superposer automatiquement le gabarit de forme au contour du véhicule automobile et il pourrait également placer automatiquement les motifs aux extrémités haute et basse du véhicule automobile chargé. Dans cette variante, le conducteur pourrait éventuellement corriger manuellement le résultat de ces opérations automatiques, si cela s'avérait nécessaire, avant que le calculateur calcule la dimension d'ensemble.

Si les étapes a) à c), à savoir
a) acquisition d'une image sur laquelle apparaît une partie au moins dudit véhicule automobile 10 et dudit chargement 20,
b) acquisition d'un gabarit de forme 30, 31 associé audit véhicule automobile 10,
c) mise à l'échelle dudit gabarit de forme 30, 31 par rapport à l'image de ladite partie du véhicule automobile 10,
peuvent être réalisées automatiquement ou sous la commande manuelle d'un usager, l'étape d) de déduction de ladite dimension d'ensemble L1, L2 est réalisée uniquement à l'aide du calculateur dûment programmé à cet effet.

## Revendications

1. Procédé de détermination d'une dimension d'ensemble (L1, L2) d'un véhicule automobile (10) équipé à l'extérieur d'un chargement (20), comportant des étapes de :
a) acquisition d'une image sur laquelle apparaît une partie au moins dudit véhicule automobile (10) et dudit chargement (20),
b) acquisition d'un gabarit de forme (30, 31) associé audit véhicule automobile (10),
c) mise à l'échelle dudit gabarit de forme (30, 31) par rapport à l'image de ladite partie du véhicule automobile (10), et
d) déduction de ladite dimension d'ensemble (L1, L2) basée sur l'étape de mise à l'échelle, l'image de ladite partie du véhicule automobile (10) et le gabarit de forme (30, 31) étant affichés en position superposée sur un écran (110), puis le gabarit de forme (30, 31) étant mis à l'échelle de telle manière qu'il se superpose au contour du véhicule automobile (10).

2. Procédé de détermination selon la revendication précédente, dans lequel, à l'étape d), il est prévu d'afficher sur l'écran (110) deux motifs (21, 22) passant respectivement par deux points du véhicule automobile (10) et/ou dudit chargement (20), ces deux points étant les plus éloignés l'un de l'autre selon une direction selon laquelle la dimension d'ensemble (L1, L2) est déterminée, puis de déduire ladite dimension d'ensemble (L1, L2) de l'écart séparant les deux motifs (21, 22) sur l'écran (110).

3. Procédé de détermination selon la revendication précédente, dans lequel, à l'étape c), la mise à l'échelle du gabarit de forme (30, 31) est effectuée manuellement, puis, à l'étape d), les positions des deux motifs (21, 22) par rapport au véhicule automobile (10) et au chargement (20) sont ajustées manuellement.

4. Procédé de détermination selon l'une des revendications précédentes, dans lequel le gabarit de forme (30, 31) est mémorisé dans la mémoire d'un terminal informatique mobile (100).

5. Procédé de détermination selon la revendication précédente, dans lequel, ladite mémoire mémorisant plusieurs gabarits de forme (30, 31) associés audit véhicule automobile (10), à l'étape b), le gabarit de forme (30, 31) acquis est sélectionné en fonction de l'orientation du terminal informatique mobile (100).

6. Procédé de détermination selon l'une des revendications précédentes, dans lequel il est prévu une étape e) de comparaison de ladite dimension d'ensemble (L2) avec un seuil (L2max) et d'émission d'un signal d'alerte si ladite dimension d'ensemble (L1, L2) dépasse ledit seuil (L2max).

7. Procédé de détermination selon l'une des revendications précédentes, dans lequel il est prévu une étape f) de détermination d'une dimension interne (L3) séparant un point du véhicule automobile (10) et un point dudit chargement (20), de comparaison de ladite dimension interne (L3) avec un seuil (L3max) et d'émission d'un signal d'alerte si ladite dimension interne (L3) dépasse ledit seuil (L3max).

8. Méthode d'aide à la conduite d'un véhicule automobile (10), comportant une opération préalable de mise en oeuvre d'un procédé de détermination conforme à l'une des revendications précédentes, puis, lorsque le véhicule automobile (10) emprunte un trajet, des étapes :
- de recherche, le long du trajet emprunté, d'une limite (Lₗᵢₘᵢₜₑ) de dimension d'ensemble au-delà de laquelle le passage d'un véhicule automobile est interdit,
- de comparaison de la dimension d'ensemble (L1, L2) avec ladite limite (Lₗᵢₘᵢₜₑ), puis, si la dimension d'ensemble (L1, L2) dépasse ladite limite (Lₗᵢₘᵢₜₑ),
- d'émission d'un signal d'alerte à l'attention du conducteur du véhicule automobile (10).

9. Terminal informatique mobile (100), configuré pour mettre en oeuvre le procédé de détermination conforme à l'une des revendications 1 à 7, comportant :
- un capteur d'images adapté à acquérir une image sur laquelle apparaît une partie au moins d'un véhicule automobile (10) équipé à l'extérieur d'au moins un chargement (20),
- une mémoire adaptée à mémoriser un gabarit de forme (30, 31) associé audit véhicule automobile (10),
- un écran (110) adapté à afficher une image de ladite partie du véhicule automobile (10) et dudit chargement (20), superposé au gabarit de forme (30, 31), et
- un calculateur.

## Patentansprüche

1. Verfahren zur Bestimmung einer Gesamtabmessung (L1, L2) eines Kraftfahrzeugs, (10) das außen mit einer Last (20) ausgestattet ist, umfassend die folgenden Schritte:
a) Erfassen eines Bildes, auf dem mindestens ein Teil des Kraftfahrzeugs (10) und der Last (20) erscheint,
b) Erfassen einer Formumgrenzungslinie (30, 31), die dem Kraftfahrzeug (10) zugeordnet ist,
c) Skalieren der Formumgrenzungslinie (30, 31) in Bezug auf das Bild des Teils des Kraftfahrzeugs (10) und
d) Herleiten der Gesamtabmessung (L1, L2), basierend auf dem Schritt des Skalierens, wobei das Bild des Teils des Kraftfahrzeugs (10) und die Formumgrenzungslinie (30, 31) in überlagerter Position auf einem Bildschirm (110) angezeigt werden, wobei dann die Formumgrenzungslinie (30, 31) so skaliert wird, dass sie sich der Kontur des Kraftfahrzeugs (10) überlagert.

2. Verfahren zur Bestimmung nach dem vorhergehenden Anspruch, bei dem im Schritt d) vorgesehen ist, auf dem Bildschirm (110) zwei Motive (21, 22) anzuzeigen, die jeweils durch zwei Punkte des Kraftfahrzeugs (10) und/oder der Last (20) verlaufen, wobei diese beiden Punkte entlang einer Richtung, entlang der die Gesamtabmessung (L1, L2) bestimmt wird, am weitesten voneinander entfernt sind, dann die Gesamtabmessung (L1, L2) aus dem Abstand herzuleiten, der die beiden Motive (21, 22) auf dem Bildschirm (110) trennt.

3. Verfahren zur Bestimmung nach dem vorhergehenden Anspruch, bei dem im Schritt c) das Skalieren der Formumgrenzungslinie (30, 31) manuell durchgeführt wird, dann im Schritt d) die Positionen der beiden Motive (21, 22) in Bezug auf das Kraftfahrzeug (10) und die Last (20) manuell justiert werden.

4. Verfahren zur Bestimmung nach einem der vorhergehenden Ansprüche, bei dem die Formumgrenzungslinie (30, 31) in dem Speicher eines mobilen Datenverarbeitungsendgeräts (100) gespeichert ist.

5. Verfahren zur Bestimmung nach dem vorhergehenden Anspruch, bei dem, wenn der Speicher mehrere dem Kraftfahrzeug (10) zugeordnete Formumgrenzungslinien (30, 31) speichert, im Schritt b) die erfasste Formumgrenzungslinie (30, 31) in Abhängigkeit von der Ausrichtung des mobilen Datenverarbeitungsendgeräts (100) ausgewählt wird.

6. Verfahren zur Bestimmung nach einem der vorhergehenden Ansprüche, bei dem ein Schritt e) des Vergleichens der Gesamtabmessung (L2) mit einem Schwellenwert (L2max) und des Sendens eines Warnsignals, wenn die Gesamtabmessung (L1, L2) den Schwellenwert (L2max) überschreitet, vorgesehen ist.

7. Verfahren zur Bestimmung nach einem der vorhergehenden Ansprüche, bei dem ein Schritt f) des Bestimmens einer Innenabmessung (L3), die einen Punkt des Kraftfahrzeugs (10) und einen Punkt der Last (20) trennt, des Vergleichens der Innenabmessung (L3) mit einem Schwellenwert (L3max) und des Aussendens eines Warnsignals, wenn die Innenabmessung (L3) den Schwellenwert (L3max) überschreitet, vorgesehen ist.

8. Methode zur Unterstützung beim Fahren eines Kraftfahrzeugs (10), umfassend einen vorherigen Vorgang des Umsetzens eines Verfahrens zur Bestimmung nach einem der vorhergehenden Ansprüche, dann, wenn das Kraftfahrzeug (10) eine Strecke befährt, die folgenden Schritte:
- Suchen, entlang der befahrenen Strecke, eines Grenzwerts (Lₗᵢₘᵢₜₑ) der Gesamtabmessung, über den hinaus die Durchfahrt eines Kraftfahrzeugs verboten ist,
- Vergleichen der Gesamtabmessung (L1, L2) mit dem Grenzwert (Lₗᵢₘᵢₜₑ), dann, wenn die Gesamtabmessung (L1, L2) den Grenzwert (Lₗᵢₘᵢₜₑ) überschreitet,
- Aussenden eines Warnsignals an den Fahrer des Kraftfahrzeugs (10).

9. Mobiles Datenverarbeitungsendgerät (100), das dazu ausgestaltet ist, das Verfahren zur Bestimmung nach einem der Ansprüche 1 bis 7 umzusetzen, umfassend:
- einen Bildsensor, der geeignet ist, ein Bild zu erfassen, auf dem ein Teil mindestens eines Kraftfahrzeugs (10) erscheint, das außen mit mindestens einer Last (20) ausgestattet ist,
- einen Speicher, der geeignet ist, eine dem Kraftfahrzeug (10) zugeordnete Formumgrenzungslinie (30, 31) zu speichern,
- einen Bildschirm (110), der geeignet ist, ein Bild des Teils des Kraftfahrzeugs (10) und der Last (20) anzuzeigen, der Formumgrenzungslinie (30, 31) überlagert, und
- einen Rechner.

## Claims

1. Method for determining an overall dimension (L1, L2) of a motor vehicle (10) equipped, on the outside, with a load (20), comprising steps of:
a) acquiring an image in which at least part of said motor vehicle (10) and of said load (20) appears,
b) acquiring a shape template (30, 31) associated with said motor vehicle (10),
c) scaling said shape template (30, 31) with respect to the image of said part of the motor vehicle (10), and
d) deducing said overall dimension (L1, L2) based on the scaling step, the image of said part of the motor vehicle (10) and the shape template (30, 31) being displayed in a superimposed position on a screen (110), the shape template (30, 31) then being scaled so that it is superimposed on the outline of the motor vehicle (10).

2. Determination method according to the preceding claim, wherein, in step d), provision is made for displaying, on the screen (110), two patterns (21, 22) passing respectively through two points of the motor vehicle (10) and/or of said load (20), these two points being the furthest from one another in a direction in which the overall dimension (L1, L2) is determined, then for deducing said overall dimension (L1, L2) from the gap separating the two patterns (21, 22) on the screen (110).

3. Determination method according to the preceding claim, wherein, in step c), the shape template (30, 31) is scaled manually, then, in step d), the positions of the two patterns (21, 22) with respect to the motor vehicle (10) and to the load (20) are adjusted manually.

4. Determination method according to one of the preceding claims, wherein the shape template (30, 31) is stored in the memory of a mobile computer terminal (100).

5. Determination method according to the preceding claim, wherein, said memory storing several shape templates (30, 31) associated with said motor vehicle (10), in step b), the shape template (30, 31) acquired is selected depending on the orientation of the mobile computer terminal (100).

6. Determination method according to one of the preceding claims, wherein provision is made for a step e) of comparing said overall dimension (L2) with a threshold (L2max) and of transmitting a warning signal if said overall dimension (L1, L2) exceeds said threshold (L2max).

7. Determination method according to one of the preceding claims, wherein provision is made for a step f) of determining an internal dimension (L3) separating a point of the motor vehicle (10) and a point of said load (20), of comparing said internal dimension (L3) with a threshold (L3max) and of transmitting a warning signal if said internal dimension (L3) exceeds said threshold (L3max).

8. Method for assisting with driving a motor vehicle (10), comprising a prior operation of implementing a determination method in accordance with one of the preceding claims, then, when the motor vehicle (10) takes a route, steps:
- of searching, along the route taken, for an overall dimension limit (Lₗᵢₘᵢₜ) beyond which a motor vehicle is prohibited from passing through,
- of comparing the overall dimension (L1, L2) with said limit (Lₗᵢₘᵢₜ), then, if the overall dimension (L1, L2) exceeds said limit (Lₗᵢₘᵢₜ),
- of transmitting a warning signal for the attention of the driver of the motor vehicle (10).

9. Mobile computer terminal (100), configured to implement the determination method in accordance with one of Claims 1 to 7, comprising:
- an image sensor adapted to acquire an image in which at least part of a motor vehicle (10) equipped, on the outside, with at least one load (20) appears,
- a memory adapted to store a shape template (30, 31) associated with said motor vehicle (10),
- a screen (110) adapted to display an image of said part of the motor vehicle (10) and of said load (20), superimposed on the shape template (30, 31), and
- a computer.
